# EUROPEAN PATENT APPLICATION

(11) **EP 3 438 538 A2**
(43) Date of publication of application: **06.02.2019**
(21) Application number: 18187310.0
(22) Date of filing: 03.08.2018
(51) Int. Cl.: F23R 3/00

(54) **GAS TURBINE ENGINE COOLING ARRANGEMENT**

(30) Priority: 03.08.2017 US 201715668135
(71) Applicant: United Technologies Corporation, Farmington, CT 06032 (US)
(72) Inventor: SLAVENS, Thomas N., Norman, OK Oklahoma 73071 (US); BURDICK, Andrew D., Somers, CT Connecticut 06071 (US)
(74) Representative: Dehns

(57) **Abstract**

A gas turbine engine cooling arrangement includes a component (92) and a pedestal (120). The component (92) of a gas turbine engine has a first surface (110) and a second surface (112) disposed opposite the first surface (110). The pedestal (120) is disposed on the second surface (112). The pedestal (120) has an outer surface (130) extending along a first axis (132) away from the second surface (112) between a pedestal base (134) and a pedestal top (136). A first lobe (160) is defined by the outer surface (130) and extends along an axis that is disposed parallel to the first axis (132).

## Description

### BACKGROUND

Illustrative embodiments pertain to the art of cooling arrangements for gas turbine engines.

Improvements in gas turbine engine performance may be linked to a reliably sustained overall increase in pressure ratio or turbine inlet temperature that may be during operation of the gas turbine engine. Increases in efficiency through the increased pressure ratio or turbine inlet temperature may increase the temperature of the working fluid of the gas turbine engine. Dedicated cooling air may be extracted from another portion of the gas turbine engine and used to cool components that are exposed to the working fluid. The extraction of cooling air may affect the overall efficiency of the gas turbine engine.

Accordingly, it may be desirable to provide features to enhance the heat transfer efficiency of the cooling air to affect the overall efficiency of the gas turbine engine.

### BRIEF DESCRIPTION

Disclosed is a gas turbine engine cooling arrangement. The gas turbine engine cooling arrangement includes a component and a pedestal. The component of a gas turbine engine has a first surface and a second surface disposed opposite the first surface. The pedestal is disposed on the second surface. The pedestal has an outer surface extending along a first axis away from the second surface between a pedestal base and a pedestal top. A first lobe is defined by the outer surface and extends along an axis that is disposed parallel to the first axis.

In addition to one or more of the features described herein, the outer surface defines a second lobe that is spaced apart from the first lobe and extends along another axis that is disposed parallel to the first axis.

In addition to one or more of the features described herein, an indent is defined between the first lobe and the second lobe.

In addition to one or more of the features described herein, a panel spaced apart from the component of the gas turbine engine combustor panel, the panel having a first panel surface that faces towards the second surface and a second panel surface that is disposed opposite the first panel surface.

In addition to one or more of the features described herein, the panel defines a plurality of cooling holes that extend from the first panel surface to the second panel surface.

In addition to one or more of the features described herein, a mounting stud disposed on the second surface towards the panel.

In addition to one or more of the features described herein, a plurality of protrusions disposed on the second surface and disposed about the mounting stud.

In addition to one or more of the features described herein, the pedestal is provided as part of a plurality of pedestals that are disposed about the plurality of protrusions.

In addition to one or more of the features described herein, a height of the pedestal measured between the pedestal top and the pedestal base is less than one third of a distance measured between the second surface and the first panel surface.

Also disclosed is a gas turbine engine cooling arrangement that includes a pedestal. The pedestal has an outer surface extending along a first axis away from a surface of a component of a gas turbine engine between a pedestal base and a pedestal top. The pedestal defines a plurality of indents that are spaced apart from each other.

In addition to one or more of the features described herein, each indent of the plurality of indents extend axially from the outer surface towards the first axis.

In addition to one or more of the features described herein, each indent of the plurality of indents extend radially between the pedestal base and the pedestal top.

In addition to one or more of the features described herein, the plurality of indents define a plurality of lobes.

Further disclosed is a gas turbine engine. The gas turbine engine includes a first panel, a second panel, and a plurality of pedestals. The first panel is connected to a shell. The first panel has a first panel surface and a second panel surface that is disposed opposite the first panel surface. The second panel is operatively connected to the first panel. The second panel has a first surface and a second surface disposed opposite the first surface that faces towards the first panel surface. The plurality of pedestals are disposed on the second surface. Each pedestal of the plurality of pedestals has an outer surface extending along a first axis from the second surface towards the first panel surface. Each pedestal of the plurality of pedestals defines a first indent that extends from the outer surface towards the first axis.

In addition to one or more of the features described herein, each pedestal of the plurality of pedestals further defining a second indent that is spaced apart from the first indent and extends from the outer surface towards the first axis.

In addition to one or more of the features described herein, a first lobe is defined between the first indent and the second indent.

In addition to one or more of the features described herein, each pedestal of the plurality of pedestals further defining a third indent that is spaced apart from the first indent and the second indent, the third indent extends from the outer surface towards the first axis.

In addition to one or more of the features described herein, each pedestal of the plurality of pedestals further defining a fourth indent that is spaced apart from the third indent, the fourth indent extends from the outer surface towards the first axis.

In addition to one or more of the features described herein, a second lobe is defined between the third indent and the fourth indent.

### BRIEF DESCRIPTION OF THE DRAWINGS

The following descriptions should not be considered limiting in any way. With reference to the accompanying drawings, like elements are numbered alike:
FIG. 1 is a schematic illustration of a gas turbine engine;
FIG. 2 is an enlarged sectional view of a combustor of a combustor section of the gas turbine engine of FIG. 1;
FIG. 3 is a section view of a portion of a panel assembly of the combustor of FIG. 2;
FIG. 4 is a partial perspective view of the panel assembly;
FIG. 5 is a perspective view of a pedestal of the panel assembly; and
FIG. 6 is a top view of the pedestal of the panel assembly.

### DETAILED DESCRIPTION

A detailed description of one or more embodiments of the disclosed apparatus and method are presented herein by way of exemplification and not limitation with reference to the Figures.

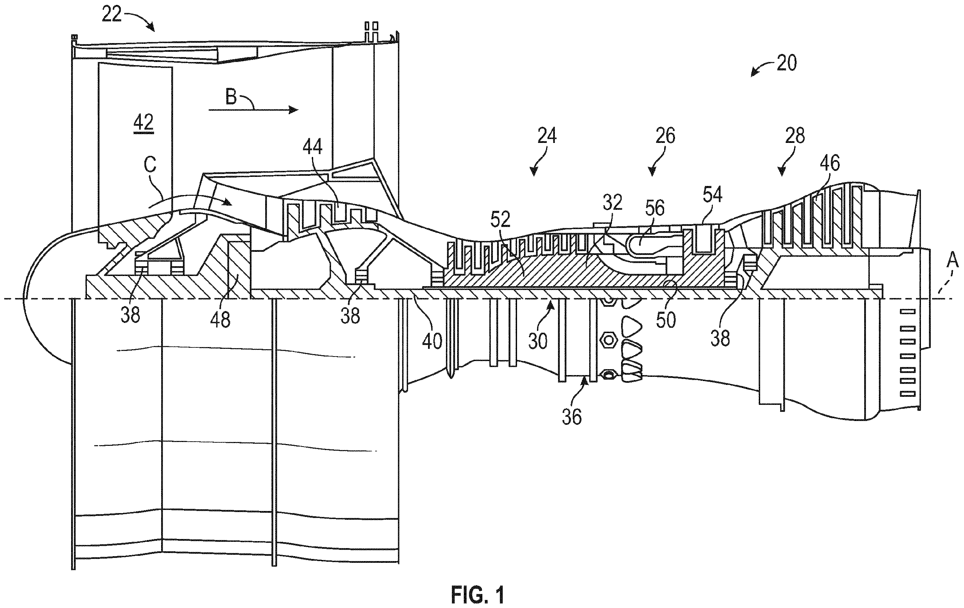

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative gas turbine engines may include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The illustrative gas turbine engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may be alternatively or additionally provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in illustrative gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in illustrative gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The gas turbine engine 20 in one example is a high-bypass geared aircraft engine. In a further example, the gas turbine engine 20 bypass ratio may be greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the gas turbine engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only illustrative of one embodiment of a geared architecture engine and that the present disclosure is applicable to other gas turbine engines including direct drive turbofans.

A significant amount of thrust is provided by the bypass flow B due to the high bypass ratio. The fan section 22 of the gas turbine engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

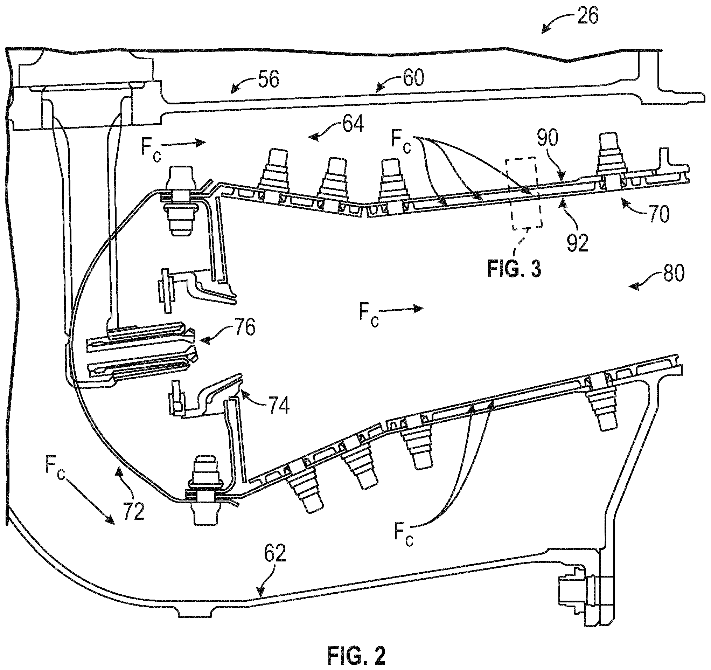

Referring to FIG. 2, the combustor 56 of the combustor section 26 of the gas turbine engine 20 is more clearly illustrated. The combustor 56 includes an outer shell 60 that is disposed radially outboard and disposed about an inner shell 62. A plenum 64 is defined between the outer shell 60 and inner shell 62. The combustor 56 further includes a panel assembly 70 that is operatively connected to a bulkhead 72 that defines a nozzle or swirler 74 that a fuel nozzle 76 extends towards.

Fuel provided through the fuel nozzle 76 mixes with air through the swirler 74 and is ignited in a combustion chamber 80 defined by the panel assembly 70 to produce combustion gases. The panel assembly 70 is exposed to heat that is generated by the combustion gases as the combustion gases flow within or pass through the combustion chamber 80. Cooling air, Fc, which flows through the plenum 64 may be used to cool portions of the panel assembly 70.

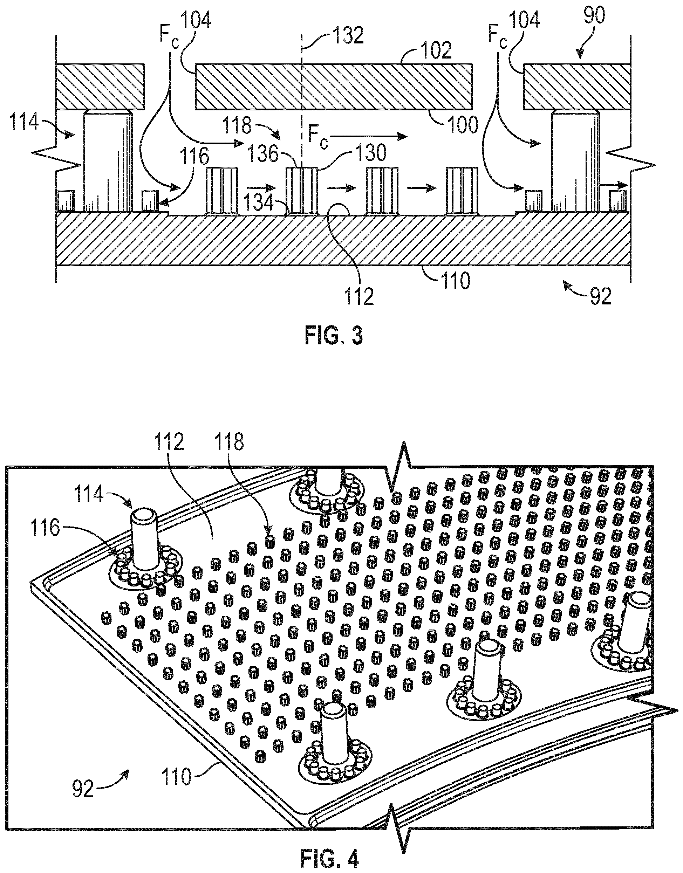

Referring to FIGS. 2 and 3, the panel assembly 70 may be a combustor panel assembly that includes a first panel 90 and second panel 92. The first panel 90 is operatively connected to at least one of the outer shell 60 or the inner shell 62. The first panel 90 is provided with a first panel surface 100 and a second panel surface 102 that is disposed opposite the first panel surface 100. The first panel 90 defines a plurality of cooling holes 104 that extend from the first panel surface 100 to the second panel surface 102 such that the first panel 90 is configured as an impingement panel. The plurality of cooling holes 104 are positioned to receive or direct the cooling air, Fc, towards a surface of the second panel 92, to impinge on a surface of the second panel 92.

The second panel 92 may be a combustor panel that includes a first surface 110, a second surface 112 that is disposed opposite the first surface 110, a mounting stud 114, and a plurality of protrusions 116.

The first surface 110 faces towards the combustion chamber 80. The second surface 112 faces towards the first panel surface 100. The cooling air, Fc, impinges on the second surface 112 and flows between the first panel surface 100 of the first panel 90 and the second surface 112 of the second panel 92.

Referring to FIGS. 3 and 4, the second panel 92 is operatively connected to the first panel 90 by the mounting stud 114. The mounting stud 114 is disposed on the second surface 112 and extends from the second surface 112 towards the first panel surface 100 of the first panel 90. The plurality of protrusions 116 are disposed on the second surface 112 and are disposed about the mounting stud 114. The plurality of protrusions 116 have a height that is substantially less than the height of the mounting stud 114.

The second panel 92 is cooled by convecting heat away from the second surface 112 via the cooling air, Fc. A primary cooling zone may be disposed proximate a core of the cooling air, Fc, as it enters through a cooling hole of the plurality of cooling holes 104. The core of the cooling air (referred to as the impingement jet) is collinear to the cooling hole 104. Heat transfer peaks at the primary cooling zone (within the center of the cooling jet) and then decays parabolically away from this zone. The primary cooling zone has a high heat transfer rate due to a large temperature difference between the cooling air, Fc, and the second surface 112. A secondary cooling zone is created away from the core of the cooling impingement jet and has a lower heat transfer rate than the primary cooling zone. The lower heat transfer rate is based on the transverse flow of the cooling air, Fc, across the second surface 112 and the lower temperature difference between the cooling air, Fc, and the second surface 112 as the cooling flow, Fc, flows across the second panel 92.

A plurality of pedestals 118, such as cooling pedestals, may be provided as part of a gas turbine engine cooling arrangement that may be arranged on a surface of a component of the gas turbine engine 10 such as the outer shell 60, the inner shell 62, the bulkhead 72, the swirler 74, the fuel nozzle 76, the first panel 90, the second panel 92, within a turbine blade of the turbine section 28, or a case disposed about a section of the gas turbine engine 10 to augment the cooling of the component of the gas turbine engine 10 by creating larger convective surfaces for heat transfer to occur through and to increase the heat transfer rate from the component of the gas turbine engine 10 into the cooling flow or impingement flow. For example, should the plurality of pedestals 118 may be disposed on the second panel 92, the plurality of pedestals 118 may increase the heat transfer rate within the secondary cooling zone from the second panel 92 to the cooling flow, Fc. While the cooling pedestals are described as being arranged on the second panel 92 of the panel assembly 70, it is also contemplated that the cooling pedestals may be disposed on another component of the gas turbine engine 10 as described above.

The plurality of pedestals 118 are disposed on the second surface 112 of the second panel 92. In at least one embodiment, the second surface 112 may define a recessed region upon which the plurality of pedestals 118 may be disposed such that a base of each pedestal of the plurality of pedestals 118 is disposed substantially parallel to but not coplanar with at least one of the mounting stud 114 and the plurality of protrusions 116, as shown in FIG. 3. The plurality pedestals 118 are disposed about or disposed proximate the plurality of protrusions 116 and the mounting studs 114. The plurality of pedestals 118 may be integrally formed with the second panel 92 through an additive manufacturing process.

Referring to FIGS. 3, 5, and 6 each pedestal 120 of the plurality of pedestals 118 includes an outer surface 130 that extends along a first axis 132 between a pedestal base 134 and a pedestal top 136. The first axis 132 is disposed orthogonal or transverse to the longitudinal axis A. A height of each pedestal 120 of the plurality of pedestals 118 that is measured between the pedestal base 134 and pedestal top 136 is less than one third of a distance measured between the second surface 112 of the second panel 92 and the first panel surface 100 of the first panel 90.

The pedestal base 134 may have a width that is greater than a width of the pedestal top 136. Pedestal base 134 may be tapered such that the width becomes less in a direction that extends from the second surface 112 towards the pedestal top 136. In such a configuration, the pedestal base 134 may have a first width at the second surface 112 and a second width that is spaced apart from the second surface 112 that is less than the first width.

Each pedestal 120 of the plurality of pedestals 118 defines a plurality of indents 140 and a plurality of lobes 142. In at least one embodiment, the plurality of indents 140 defines the plurality of lobes 142. In at least one embodiment, the plurality of lobes 142 defines the plurality of indents 140.

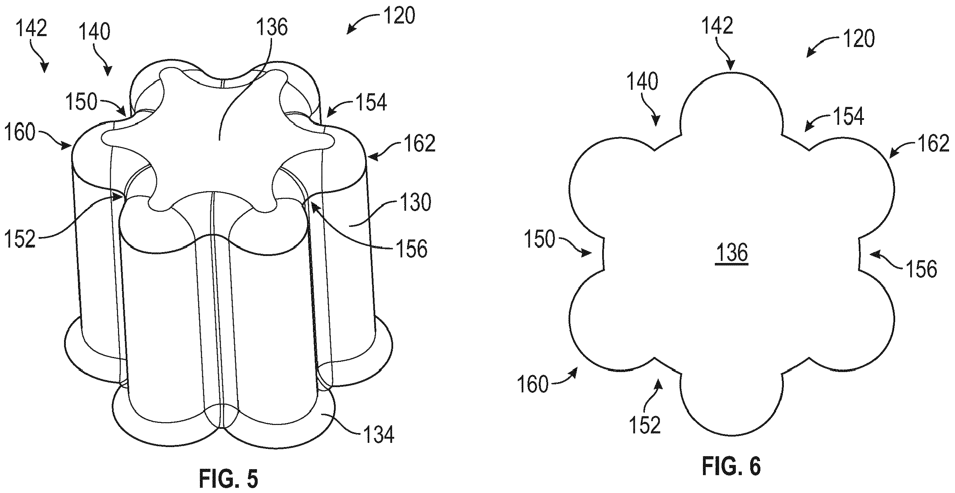

Referring to FIGS. 5 and 6, each indent of the plurality of indents 140 is spaced apart from one another. Each indent of the plurality of indents 140 extends axially (relative to the longitudinal axis A) from the outer surface 130 towards the first axis 132. Each indent of the plurality of indents 140 extends along an axis that is disposed parallel to the first axis 132. Each indent of the plurality of indents 140 extends radially (relative to the longitudinal axis A) along the first axis 132 between the pedestal base 134 and the pedestal top 136.

In an illustrative embodiment, the plurality of indents 140 include a first indent 150, a second indent 152, a third indent 154, and a fourth indent 156. The first indent 150 extends from the outer surface 130 towards the first axis 132. The second indent 152 is spaced apart from the first indent 150 and extends from the outer surface 130 towards the first axis 132. The third indent 154 is spaced apart from the first indent 150 and the second indent 152 and extends from the outer surface 130 towards the first axis 132. The fourth indent 156 is spaced apart from the first indent 150, the second indent 152, and the third indent 154 and extends from the outer surface 130 towards the first axis 132.

The plurality of lobes 142 may extend radially (relative to the longitudinal axis A) between the pedestal base 134 and the pedestal top 136. In at least one embodiment, the plurality of indents 140 may be twisted about or relative to the first axis 132. The plurality of lobes 142 may extend axially (relative to the longitudinal axis A) away from the first axis 132. In at least one embodiment, the plurality of lobes 142 may be tapered such that a width between axially aligned lobes of the plurality of lobes 142 proximate the pedestal base 134 is greater than or less than a width between the axially aligned lobes of the plurality of lobes 142 proximate the pedestal top 136.

The plurality of lobes 142 may be defined between adjacent indents of the plurality of indents 140. For example, in the illustrative embodiment, a first lobe 160 is defined between the first indent 150 and the second indent 152 and a second lobe 162 is defined between the third indent 154 and the fourth indent 156. The first lobe 160 extends along an axis that is disposed parallel to the first axis 132 and may extend away from the first axis 132. The second lobe 162 is spaced apart from the first lobe 160. The second lobe 162 extends along an axis that is disposed parallel to the first axis 132 and may extend away from the first axis 132.

A width measured between the first lobe 160 and the second lobe 162 is less than a width of the pedestal base 134.

The plurality of indents 140 and/or the plurality of lobes 142 of each pedestal 120 of the plurality of pedestals 118 increases the surface area of each pedestal 120 to improve the heat transfer from the second panel 92 to the cooling air, Fc. The convective area of each pedestal 120 of the plurality of pedestals 118 is increased as compared to a pedestal that is not provided with the plurality of indents 140 and/or the plurality of lobes 142. The increased convective area of each pedestal 120 of the plurality of pedestals 118 increases the convective cooling efficiency of the second panel 92 or other hot section components that the plurality of pedestals 118 may be disposed upon. Furthermore, the increased convective area increases the cooling efficiency while reducing the weight for comparative area of a pedestal that is not provided with the plurality of indents 140 and/or the plurality of lobes 142.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an illustrative embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A gas turbine engine cooling arrangement, comprising:
a component (92) of a gas turbine engine having a first surface (110) and a second surface (112) disposed opposite the first surface (110); and
a pedestal (120) disposed on the second surface (112), the pedestal having an outer surface (130) extending along a first axis (132) away from the second surface (112) between a pedestal base (134) and a pedestal top (136), and a first lobe (160) is defined by the outer surface (130) and extends along an axis that is disposed parallel to the first axis (132).

2. The gas turbine engine cooling arrangement of claim 1, wherein the pedestal (120) further comprising:
a second lobe (162) that is defined by the outer surface (130) and is spaced apart from the first lobe (160), the second lobe (162) extends along another axis that is disposed parallel to the first axis (132).

3. The gas turbine engine cooling arrangement of claim 2, wherein an indent (150, 152, 154, 156) is defined between the first lobe (160) and the second lobe (162).

4. The gas turbine engine cooling arrangement of claim 1, 2 or 3, further comprising:
a panel (90) spaced apart from the component (92) of the gas turbine engine , the panel (90) having a first panel surface (100) that faces towards the second surface (112) and a second panel surface (102) that is disposed opposite the first panel surface (100); and optionally
wherein the panel (90) defines a plurality of cooling holes (104) that extend from the first panel surface (100) to the second panel surface (102).

5. The gas turbine engine cooling arrangement of claim 4, further comprising:
a mounting stud (114) disposed on the second surface (112) towards the panel (90).

6. The gas turbine engine cooling arrangement of claim 5, further comprising:
a plurality of protrusions (116) disposed on the second surface (112) and disposed about the mounting stud (114); and optionally
wherein the pedestal (120) is provided as part of a plurality of pedestals (118) that are disposed about the plurality of protrusions (116); and/or optionally
wherein a height of the pedestal (120) measured between the pedestal top (136) and the pedestal base (134) is less than one third of a distance measured between the second surface (112) and the first panel surface (100).

7. A gas turbine engine cooling arrangement, comprising:
a pedestal (120) having an outer surface (130) extending along a first axis (132) away from a surface (112) of a component (92) of a gas turbine engine between a pedestal base (134) and a pedestal top (136), the pedestal (120) defining a plurality of indents (140) that are spaced apart from each other.

8. The gas turbine engine cooling arrangement of claim 7, wherein each indent (150, 152, 154, 156) of the plurality of indents (140) extend axially from the outer surface (130) towards the first axis (132).

9. The gas turbine engine cooling arrangement of claim 7 or 8, wherein each indent (150, 152, 154, 156) of the plurality of indents (140) extend radially between the pedestal base (134) and the pedestal top (136).

10. The gas turbine engine cooling arrangement of claim 9, wherein the plurality of indents (140) define a plurality of lobes (142).

11. A gas turbine engine, comprising:
a first panel (90) connected to a shell, the first panel (90) having a first panel surface (100) and a second panel surface (102) that is disposed opposite the first panel surface (100),
a second panel (92) operatively connected to the first panel (90), the second panel (92) having a first surface (110) and a second surface (112) disposed opposite the first surface (110) that faces towards the first panel surface (100), and
a plurality of pedestals (118) disposed on the second surface (112), each pedestal (120) of the plurality of pedestals (118) having an outer surface (130) extending along a first axis (132) from the second surface (112) towards the first panel surface (100), each pedestal (120) of the plurality of pedestals (118) defining a first indent (150) that extends from the outer surface (130) towards the first axis (132).

12. The gas turbine engine of claim 11, wherein each pedestal (120) of the plurality of pedestals (118) further defining a second indent (152) that is spaced apart from the first indent (150) and extends from the outer surface (130) towards the first axis (132).

13. The gas turbine engine of claim 12, wherein a first lobe (160) is defined between the first indent (150) and the second indent (152).

14. The gas turbine engine of claim 13, wherein each pedestal (120) of the plurality of pedestals (118) further defining a third indent (154) that is spaced apart from the first indent (150) and the second indent (152), the third indent (154) extends from the outer surface (130) towards the first axis (132).

15. The gas turbine engine of claim 14, wherein each pedestal (120) of the plurality of pedestals (118) further defining a fourth indent (156) that is spaced apart from the third indent (154), the fourth indent (156) extends from the outer surface (130) towards the first axis (132); and optionally wherein a second lobe (162) is defined between the third indent (154) and the fourth indent (156).
